(19) Europäisches Patentamt / European Patent Office / Office européen des brevets

(11) **EP 4 239 414 A1**

(12) **EUROPEAN PATENT APPLICATION**

(43) Date of publication:
**06.09.2023   Bulletin 2023/36**

(21) Application number: **23153048.6**

(22) Date of filing: **24.01.2023**

(51) International Patent Classification (IPC):
**G03H 1/08** *(2006.01)*    **G03H 1/22** *(2006.01)*
**G09G 3/00** *(2006.01)*    **G09G 3/18** *(2006.01)*
**G09G 5/02** *(2006.01)*    **G09G 3/20** *(2006.01)*
**G09G 3/36** *(2006.01)*    **G03H 1/26** *(2006.01)*

(52) Cooperative Patent Classification (CPC):
**G03H 1/2294; G03H 1/0808; G03H 1/0841;**
**G09G 3/002; G09G 3/003;** G03H 2001/0816;
G03H 2001/0825; G03H 2001/0875;
G03H 2001/2271; G03H 2001/266; G03H 2222/18;
G03H 2225/35; G09G 3/2003; G09G 3/36;
G09G 3/3607;                              (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.03.2022   GB 202203029**

(71) Applicant: **Envisics Ltd.**
**Milton Keynes MK1 1PT (GB)**

(72) Inventors:
• **CHRISTMAS, Jamieson**
**Milton Keynes, MK1 1PT (GB)**
• **MEMON, Ahsan**
**Milton Keynes, MK1 1PT (GB)**
• **SMEETON, Timothy**
**Milton Keynes, MK1 1PT (GB)**

(74) Representative: **Greenaway, Martin William**
**Apollo House**
**6 Bramley Road**
**Milton Keynes MK1 1PT (GB)**

(54)    **HOLOGRAM CALCULATION**

(57)    A method of projecting a first image and a second image using one multi-wavelength hologram. The first image is different to the second image. The multi-wavelength hologram is arranged for illumination by light of a first wavelength to project the first image. The multi-wavelength hologram is further arranged for illumination by light of a second, shorter wavelength to project the second image.

FIGURE 7

EP 4 239 414 A1

(52) Cooperative Patent Classification (CPC): (Cont.)
G09G 5/02; G09G 5/026; G09G 5/028;
G09G 2310/0235

**Description**

<u>FIELD</u>

The present disclosure relates to image projection. More specifically, the present disclosure relates to a method of projecting at least first and second different images, using one hologram. Some embodiments relate to providing one multi-wavelength hologram that represents two more individual holograms, for example one multi-colour hologram that represents multiple individually coloured holograms. Some embodiments relate to a method for calculating a multi-wavelength hologram. Some embodiments relate to a head-up display.

BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD", and head-mounted displays, "HMD", including near-eye devices, for example.

A moving diffuser may be used to improve image quality in devices which use coherent light such as holographic projectors.

SUMMARY

In summary, methods and systems are provided herein that enable a single hologram to represent multiple holograms at the same time (or "simultaneously"), and so enable multiple images to be projected by illumination of that single hologram, displayed on one display device. For example, the single hologram may be a multi-wavelength hologram that simultaneously represents two or more single-wavelength holograms. For example, it may be a multicolour hologram that simultaneously represents each of three individual holograms, such as red (R), green (G) and blue (B) component holograms of a target image.

It is known that, conventionally, single colour holograms are displayed, and illuminated with light of respective wavelengths/colours, separately to one another, with the corresponding display device(s) being separately calibrated to provide maximum hologram resolution for each colour. The methods and systems disclosed herein go against convention by using a common calibration of a display device to display a multi-wavelength (I.e., multi-image) hologram that effectively represents holograms of two or more different wavelengths/colours at the same time (or "simultaneously"). This necessitates using a less than ideal grey-level resolution, corresponding to the number of available light modulation/grey levels, for representing at least one of the holograms, due to the well-known relationships and interplay between drive voltage, cell gap, birefringence and wavelength for a display device. To be clear, in this context "less than ideal grey level resolution" is caused by the non-optimised calibration of the cells of the display system for one or more of the wavelengths (i.e., for one or more colours of light) and/or the use of a non-optimised voltage operating range for providing light modulation/grey levels (e.g. phase delays) in a predefined range, for one or more of the wavelengths (i.e., for one or more colours of light). Therefore, if a display system has less than ideal grey level resolution for a particular wavelength/colour, typically this means that it will be calibrated to use fewer discrete grey levels to provide different respective magnitudes of light modulation within a required full modulation range (a minimum to a maximum angle value such as

0 to $2\pi$ for phase modulation or a minimum to a maximum amplitude value such as 0 to 1 for amplitude modulation) than are conventionally used - or, than might otherwise be possible to use, if the system was being configured only for holograms and illuminating light of that particular wavelength/colour. However, the present inventors have found that, surprisingly, this loss of grey-level resolution for some of the holograms does not significantly affect the accuracy and resolution of the images that are formed from illumination of a multi-wavelength (i.e., multi-image) hologram that is calculated as described herein.

The present inventors have observed and harnessed the effects of a feature that they know as "phase wrapping", in which a plurality of different drive voltages for a display device cell may be used to provide the same light modulation value for light of a specific wavelength. There is disclosed herein a method and device that uses the phenomenon of phase wrapping and, notably, breaks the convention of independently calibrating each single colour channel. A scheme is disclosed herein in which a plurality of different voltages may be used to provide all available modulation values (e.g., in the full modulation range of 0 to $2\pi$ or 0 to 1) for one or more colour, which in some embodiments includes the colour having the longest wavelength (e.g., red light). This means that the display device is "over-driven" vis-a-vis conventional operating ranges, at least for the shorter wavelength(s) and in some cases for all the wavelengths of illuminating light. In accordance with this approach, a single hologram may be determined that reconstructs a plurality of different images - namely, a plurality of single-colour components of a full-colour image. In some embodiments, the same hologram reconstructs the red, green and blue components of a full-colour image. Notably, the red, green and blue components of the full-colour image are not the same. An approach that determines one hologram for all three colours is groundbreaking in the field of holographic projection and enables one display device to be used instead of a plurality without any of the conventional disadvantages associated with a frame sequential colour display scheme. This is because the hologram does not need to be changed or updated between sub-frames. In some embodiments, the same hologram may be illuminated by a plurality of different colours at the same time and a corresponding plurality of different single-colour images may be formed. In some embodiments, the described method is applied to multiple different combinations of multiple individual holograms in quick succession, such as to provide and illuminated multiple respective multi-wavelength holograms very quickly, for example at video image rates.

Aspects of the present disclosure are defined in the appended independent claims.

According to an aspect, a method is provided of projecting a first image and a second image using one multi-wavelength hologram, wherein the first image is different to the second image, and wherein the multi-wavelength hologram is arranged for illumination by light of a first wavelength to project the first image and wherein the multi-wavelength hologram is further arranged for illumination by light of a second, shorter wavelength to project the second image.

According to an aspect, a projector is provided, the projector being arranged to project a first image and a second image using one multi-wavelength hologram, the projector comprising a display device for displaying the multi-wavelength hologram, wherein the first image is different to the second image, and wherein the multi-wavelength hologram is arranged for illumination by light of a first wavelength to project the first image and wherein the multi-wavelength hologram is further arranged for illumination by light of a second, shorter wavelength to project the second image.

The display device may display the muti-wavelength hologram on a display area thereof. For example, the display area may comprise an array of pixels. Accordingly, the same display area (e.g. array of pixels) is used to display a single hologram that represents both the first and second images.

The method and/or the projector may be further arranged to project a third image, also using the same multi-wavelength hologram, wherein the third image is different to each of the first and second images, wherein the multi-wavelength hologram is arranged for illumination by light of a third, shortest wavelength to project the third image. For example, the first, second, and third images may comprise red, green and blue images respectively. They may comprise respective red, green and blue components of a target image. The respective image contents of each of the red, green and blue images may be at least partially different to one another.

The first and second images (and optionally also the third image) may be projected onto a common replay plane. They may at least partially spatially overlap with one another on the replay plane.

The display device comprised within the projector may comprise a plurality of pixels, wherein each pixel is configurable to provide a phase modulation value in the range 0 to $2\pi$ at the first wavelength, within a corresponding first operating range of voltage drive levels. The display device may be configured to provide phase modulation for the multi-wavelength hologram using a predetermined maximum number of discrete phase modulation levels. For example, it may provide phase modulation over 128 discrete phase levels. The projector may further comprise a display driver configured to distribute the discrete phase modulation levels over a voltage range that equals or exceeds said first operating range of voltage drive levels.

Each pixel of the phase modulator may be also configurable to provide a phase modulation value in the range 0 to $2\pi$ at the second wavelength, within a corresponding second operating range of voltage drive levels, and the projector may be configured to drive one or more of the pixels to a voltage that exceeds the maximum voltage in the second operating range of voltage drive levels.

Because the second wavelength is shorter than the first wavelength, the display device may be configured to deliver a phase modulation value in the range 0 to $2\pi$ over a smaller voltage range for the second wavelength than it does for the first, longer wavelength. The projector may be configured to use the discrete phase levels defined for the first hologram, and their respective voltage levels, to deliver phase modulation for the second hologram. Because the second wavelength is shorter, the voltage gaps between discrete voltage levels that were defined for the first hologram will represent bigger phase modulation gaps for the second hologram than they do for the first hologram. Therefore, the resolution of the second hologram will be lower than the resolution of the first hologram, when represented using common discrete voltage levels. Moreover, the higher voltage levels defined for the first hologram will represent a phase modulation of greater than $2\pi$ for the second hologram.

The projector may include, or may work in conjunction with, any suitable light source arranged to illuminate the multi-wavelength hologram with light of the first wavelength to form the first image and light of the second wavelength to form the second image. For example, first and second laser diodes may be provided. For example, a light source that is configurable to separately deliver light at multiple different respective wavelengths may be provided.

The projector, or the light source working in conjunction with the projector, may be arranged to illuminate the multi-wavelength hologram with light of the first wavelength and light of the second wavelength substantially simultaneously. Therefore, the first image and the second image (and optionally also the third image) may be formed substantially simultaneously.

The multi-wavelength hologram may comprise a representation of each of a first hologram, comprising a first set of hologram pixel values corresponding to the first image, and a second hologram, comprising a second set of hologram pixel values corresponding to the second image. Accordingly, the single multi-wavelength hologram represents both the first and second holograms at the same time (i.e. "simultaneously" or "concurrently"). For instance, the muti-wavelength hologram may comprise a "combined" or "composite" representation of the first and second holograms. For example, it may comprise an averaged, or aggregate, hologram, formed from the first and second holograms.

Each pixel of the multi-wavelength hologram may comprise a combined hologram pixel value determined from corresponding first and second hologram pixel values of the first hologram and the second hologram respectively. Each combined hologram pixel value may comprise an average value determined from the corresponding first and second hologram pixel values of the first hologram and the second hologram respectively. At least one of the first hologram pixel value and the second hologram pixel value may have a respective weighting applied thereto, for determining the combined hologram pixel value. Therefore, for one or more pixels, the combined hologram pixel value may more closely resemble the corresponding pixel value from the first hologram than the second hologram, or vice versa. Any suitable method may be employed for determining whether a weighting should be applied, and its value.

The projector may further comprise a processor arranged to, for a selected pixel of the display device, obtain at least a first pixel drive level for the first hologram and obtain at least a second pixel drive level for the second hologram, and determine a multi-wavelength pixel drive level for that pixel of the display device, based on the first and second pixel drive levels. The multi-wavelength pixel drive level may be closer to the first pixel drive level than to the second pixel drive level, or vice versa, dependent on the weighting of the respective hologram values for a given pixel.

The multi-wavelength pixel drive level may be determined based on a best fit between the first pixel drive level for the first hologram and the second pixel drive level for the second hologram. In other words, it may simultaneously comprise an approximation to the first pixel drive level and to the second pixel drive level.

The processor may be arranged to, for a selected pixel of the display device, obtain a plurality of second pixel drive levels for the second hologram, wherein each of said plurality of second pixel drive levels corresponds to the same light modulation level for the second hologram, and to determine the multi-wavelength pixel drive level based on the first pixel drive level and a selected one of the plurality of second pixel drive levels. This is possible because the voltage levels for the first hologram will correspond to overdriving the second hologram, beyond a phase modulation value of $2\pi$, and because of phase wrapping, which has been identified by the present inventors as a phenomenon in which phase modulation repeats itself in cycles of $n(2\pi)$. As a result of those factors, for at least some pixels of the second hologram, there will be a first available voltage level corresponding to a required phase modulation value of "$\theta$" and there will be a second available voltage level, corresponding to a phase modulation of "$\theta + 2\pi$", which has the same modulation effect as the first available voltage level. Therefore, a choice will be available as to which of those voltage levels is used, for representing the second hologram and for determining the corresponding multi-wavelength pixel drive level, for that pixel (or those pixels).

The processor may be further arranged to, for a selected pixel of the display device (or for a selected pixel of the multi-wavelength hologram), obtain a plurality of first pixel drive levels for the first hologram, wherein each of said plurality of first pixel drive levels corresponds to the same light modulation level for the first hologram, and determining the multi-wavelength pixel drive level based on a selected one of the plurality of first pixel drive levels and a selected one of the plurality of second pixel drive levels. In other words, the projector may be configured to distribute the available voltage levels for the first hologram over a phase modulation range of greater than 0 to $2\pi$, for example, as a result of which there will be a plurality of possible voltage levels for delivering at least some of the required phase modulation values for the first hologram (as well as for the second hologram).

The step of determining the multi-wavelength pixel drive level may comprise identifying a best match pair of pixel drive levels, wherein the pair comprises one from the plurality of first pixel drive levels and one from the plurality of second pixel drive levels. A weighting may be applied to influence whether both pixel drive levels should be matched equally, or whether one should be favoured over the respective other.

According to an aspect, a method is provided of determining a multi-wavelength hologram, said multi-wavelength hologram being configured to project a first image and a second image when it is displayed on a pixelated display device and illuminated by light of a first wavelength to project the first image and by light of a second, shorter wavelength to project the second image, wherein the first image is different to the second image. The method comprises obtaining a first hologram, comprising a first set of hologram pixel values corresponding to the first image; obtaining a second hologram, comprising a second set of hologram pixel values, corresponding to the second image; determining a first operating range of voltage drive levels, wherein each pixel of the display device is configurable to provide a light modulation value in the full range of light modulation values at the first wavelength, when driven within the first operating range; determining a maximum number of discrete light modulation levels for the display device and distributing those discrete light modulation levels over a voltage range that equals or exceeds said first operating range of voltage drive levels; using the distributed discrete light modulation levels to separately represent each of the first hologram and the second hologram and outputting a corresponding first set of pixel drive levels for the first hologram and a second set of pixel drive levels for the second hologram; for each pixel of the multi-wavelength hologram, selecting a first drive level from the first set of pixel drive levels, to represent the corresponding pixel of the first hologram, and selecting a second drive level from the second set of pixel drive levels, to represent the corresponding pixel of the second hologram, and outputting a multi-wavelength drive level for that pixel, based on the selected first and second drive levels; using the multi-wavelength drive level output for each pixel to form the multi-wavelength hologram.

The light modulation values may comprise phase modulation values, amplitude modulation values or a combination thereof. As the skilled person will appreciate, the full range of phase modulation values at the first wavelength may be defined from 0 to $2\pi$, whilst the full range of amplitude modulation values may be defined from 0 to 1. The plurality of discrete modulation values may be referred to as grey levels.

The multi-wavelength hologram may be further configured to also project a third image when it is displayed on the pixelated display device and illuminated by light of a third, shortest wavelength, wherein the first, second and third images are all different to one another. The method may further comprise obtaining a third hologram, comprising a third set of hologram pixel values, corresponding to the third image, and using the distributed discrete light modulation levels to also separately represent the third hologram and outputting a corresponding third set of pixel drive levels for the third hologram. The method may further comprise, for each pixel of the multi-wavelength hologram, selecting a third drive level from the third set of pixel drive levels, to represent the corresponding pixel of the third hologram, and outputting a multi-wavelength drive level for that pixel, based on the selected first, second and third drive levels. The method may further comprise using that multi-wavelength drive level output for each pixel to form the multi-wavelength hologram.

The selected first drive level and the selected second drive level (and optionally also the third drive level) may be close to one another in magnitude. They may be closer to one another in magnitude than any other possible pair of drive levels that comprises a first drive level from the first set of pixel drive levels and a second drive level from the second set of pixel drive levels. In embodiments in which three drive levels are combined, the selected drive levels may be closer to one another in magnitude than any other possible set of first, second and third drive levels, for a given pixel of the multi-wavelength hologram that is to be output.

The method may further comprise determining an average drive level from said first drive level and said second drive level (and, optionally, said third drive level) and wherein the average drive level is output as the multi-wavelength drive level for that pixel. At least one of said first drive level and said second drive level (and, optionally, said third drive level) may be weighted, to obtain the average drive level.

The method may further comprise displaying the multi-wavelength hologram on the display device, and optionally may further comprise illuminating the display device with light of the first wavelength and light of the second wavelength to project the first and second images (and optionally also illuminating it with light of the third wavelength to project the third image).

A hologram engine or projector or other suitable optical system may be arranged to perform the method of the above aspects.

According to an aspect, a diffractive structure formed by the method of the above aspect is provided.

According to an aspect, a display system is arranged to display a first image and second image at substantially the same time using a multi-wavelength hologram, wherein the display system comprises: a light modulator comprising a plurality of pixels arranged to display the multi-wavelength hologram, wherein each pixel of the light modulator is a liquid crystal cell arranged to provide light modulation (e.g. phase modulation, amplitude modulation or a combination thereof) and each liquid crystal cell has a cell gap; a processor arranged to determine the multi-wavelength hologram from a first hologram of the first image and a second hologram of the second image, wherein the light modulator is configured so that at least some light modulation values of the second hologram are each providable by a corresponding plurality of different pixel drive levels of the respective pixel; wherein determining the multi-wavelength hologram comprises selecting a pixel drive level of the corresponding plurality of different pixel drive levels for each of said at least some phase values of the second hologram.

The light modulator may be arranged for illumination and the amount of light modulation provided by a pixel may be determined by the pixel drive level and by the wavelength of the illuminating light. A longer wavelength of illuminating light typically requires a greater pixel drive level to achieve a particular light modulation value than a shorter wavelength of illuminating light requires.

Selecting a pixel drive level for each pixel of the second hologram may be based on a best fit with a pixel drive level of the corresponding pixel of the first hologram. There may be more than one possible pixel drive levels to choose from for at least some of the pixels of the second hologram.

The first hologram may be configured for illumination by light of a first wavelength and the second hologram may configured for illumination by light of a second, shorter wavelength. The pixel values of the first hologram and second hologram may be within a full light modulation range (e.g. 0 to $2\pi$ for phase modulation or 0 to 1 for amplitude modulation). However, it may be possible, at least for the second hologram, to drive the light modulator to deliver the required modulation effects using light modulation values that exceed the maximum level of the full range (e.g. $2\pi$ for phase modulation or 1 for amplitude modulation), due to the phenomenon of phase wrapping.

Each pixel value of the multi-wavelength hologram may be determined from a corresponding pixel of the first hologram and a corresponding pixel value of the second hologram, wherein the light modulator is arranged such that, for any pair of pixel values of the first hologram and second hologram, a plurality of combinations of corresponding pixel drive levels is possible. For example, more than one pixel drive level may be suitable for delivering the required light modulation for the corresponding pixel of at least one of the first hologram or the second hologram. The processor may be arranged to identify a best-match combination of pixel drive levels from which to determine the respective pixel drive level for that pixel of the multi-wavelength hologram.

The display system may be further arranged to display a third image at substantially the same time as the first and second images, using the multi-wavelength hologram. The multi-wavelength hologram may comprise a red-green-blue (RGB) hologram.

According to an aspect, a diffractive structure is arranged to project a first image and a second image, wherein the first image is different to the second image, and wherein the diffractive structure is arranged for illumination by light of a first wavelength to project the first image and for illumination by light of a second, shorter wavelength to project the second image.

The diffractive structure may be further arranged to also project a third image, wherein the third image is different to each of the first and second images and wherein the diffractive structure is arranged for illumination by light of a third, shortest wavelength to project the third image.

The diffractive structure may be arranged for display on a pixelated display device. The diffractive structure may be configured to represent three single-wavelength diffractive structures, which respectively correspond to the three individual images, using a common set of voltage levels of the pixelated display device, wherein each voltage level corresponds to a different respective light modulation level (e.g. phase modulation level, amplitude modulation level or a combination thereof) for each of the three single-wavelength diffractive structures. The diffractive structure may thus be arranged to represent each single-wavelength diffractive structure at a different respective resolution, simultaneously. The diffractive structure may thus be arranged to represent a different respective range of light modulation values for each individual single-wavelength diffractive structure, wherein, for phase modulation, the range may be at least 0 to $2\pi$ for the first (longest wavelength) diffractive structure and may exceed 0 to $2\pi$ for the other individual single-wavelength diffractive structures (which are configured for illumination by light of shorter and shortest wavelengths, respectively). However, it has been found that the diffractive structure may nonetheless, when illuminated, lead to the projection (i.e., the holographic reconstruction) of high-quality images for all the first, second and third images.

The diffractive structure may comprise a multi-wavelength hologram. It may comprise a kinoform.

According to an aspect, an optical system is arranged to project a first image, a second image and a third image using one multi-wavelength hologram, wherein each of said first, second and third images are different, and wherein the multi-wavelength hologram is arranged for illumination by light of a first wavelength to project the first image, and is further arranged for illumination by light of a second, shorter wavelength to project the second image, and is further arranged for illumination by light of a third, shortest wavelength to project the third image.

The light of the first, second and third wavelengths may comprise red, green and blue light, respectively. The first, second and third images may combine at a replay plane to provide a multi-colour image.

According to an aspect, a voltage selection unit is provided for driving a pixelated display device to display a multi-wavelength diffractive structure, said multi-wavelength diffractive structure being configured to represent a first diffractive structure and a second, different diffractive structure, the voltage selection unit being configured to: determine a first plurality of discrete voltage levels at which the display device may be driven, wherein each level of said first plurality of discrete voltage levels corresponds to a respective discrete light modulation value for the first diffractive structure, in the full range of light modulation values thereof (e.g. 0 to $2\pi$ for phase modulation); determine a correspondence between each level of said first plurality of discrete voltage levels and a respective discrete phase modulation value for the second diffractive structure, in a range exceeding the full range of light modulation values thereof (e.g. exceeding 0 to $2\pi$ for phase modulation); determine a first set of pixel drive values for representing the first diffractive structure on the display device and a second set of pixel drive values for representing the second diffractive structure on the display device, using the first plurality of discrete voltage levels; for each pixel of the display device, select an optimised pixel drive value that represents each of the pixel drive value for the first diffractive structure and the pixel drive value for the second diffractive structure.

The multi-wavelength diffractive structure may be further configured to also represent a third, different diffractive structure, wherein the voltage selection unit may be configured to: also determine a correspondence between each level of said first plurality of discrete voltage levels and a respective discrete light modulation value for the third diffractive structure, in a range exceeding the full range of light modulating values thereof (e.g. exceeding 0 to $2\pi$ for phase modulation); also determine a third set of pixel drive values for representing the third diffractive structure on the display device, using the first plurality of discrete voltage levels; and for each pixel of the display device, select an optimised pixel drive value that represents the pixel drive value for the first diffractive structure and the pixel drive value for the second diffractive structure and the pixel drive value for the third diffractive structure.

For at least one pixel of least one of the diffractive structures, there may be more than one possible voltage level that corresponds to the required light modulation value. The voltage selection unit may therefore be configured, for each such pixel of the display device, to identify a best fit voltage level that represents one possible voltage level for each of the first, second and third diffractive structures.

For each pixel for which there is more than one possible combination of voltage levels for representing each of the first, second and third diffractive structures, the voltage selection unit is configured to: determine all possible pairs of voltage levels, wherein each pair comprises a possible voltage level for one diffractive structure and a corresponding possible voltage level for one of the respective other diffractive structures; determine a difference in magnitude of the two voltage levels in each possible pair; and identify an optimised combination of three possible pairs for that pixel, representing the differences in magnitude of voltage levels between each diffractive structure and each of the respective others, wherein the total difference in magnitude for the pairs in the optimised combination is minimised.

The first, second and third diffractive structures may comprise red, green and blue holograms, respectively. The pairs may therefore comprise a red-green (RG) pair, a green-blue (GB) pair and a blue-red (BR) pair.

A bias may be applied to the difference in magnitude of voltage levels between the two diffractive structures at least one of the three pairs in the optimised combination. For example, it may be determined that it is more important to minimise the voltage gap for the RG pair, as compared to the voltage gaps for the GB and BR pairs, or vice versa. The bias size and selection may be determined based on any suitable factors such as image type, display device type, cell gap, and so on.

The voltage selection unit may be further configured to output a voltage level that represents the optimised combination of three possible pairs for each pixel, wherein the output voltage level comprises the optimised pixel drive value for the respective pixel.

The aspects above enable a single multi-wavelength diffractive structure to "simultaneously" or "concurrently" represent at least two individual (single wavelength) diffractive structures, and to project two (or more) corresponding images clearly and accurately, when suitably illuminated. It may be said that the muti-wavelength diffractive structure is a single, optimized representation (e.g. approximation) of the at least two single wavelength diffractive structures. This is done in a computationally intelligent and efficient way, that has not been contemplated in conventional holography to date. The potential for financial savings, improved compactness and enhanced practical applications of multi-wavelength holography, because of the aspects and embodiments disclosed herein, is very significant.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to $2\pi$) which represents the amount of phase retardation provided by that pixel. For example, a pixel of the spatial light modulator described as having a phase value of $\pi/2$ will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field. Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 shows phase delay dependence on voltage for three wavelengths of light;
Figure 5 shows columns representing three single-colour holograms, divided into conventional maximum-resolution grey levels;
Figure 6 shows columns representing three single-colour holograms, divided into grey levels in accordance with embodiments;
Figure 7 shows possible phase values for a pixel of each of the three single-colour holograms of Figure 6, in accordance with embodiments;
Figure 8 shows a conventional multicolour holographic reconstruction of a target image; and
Figure 9 shows a multicolour holographic reconstruction of the target image of Figure 8, in accordance with embodiments;

The same reference numbers will be used throughout the drawings to refer to the same or like parts.

DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike- the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

Optical configuration

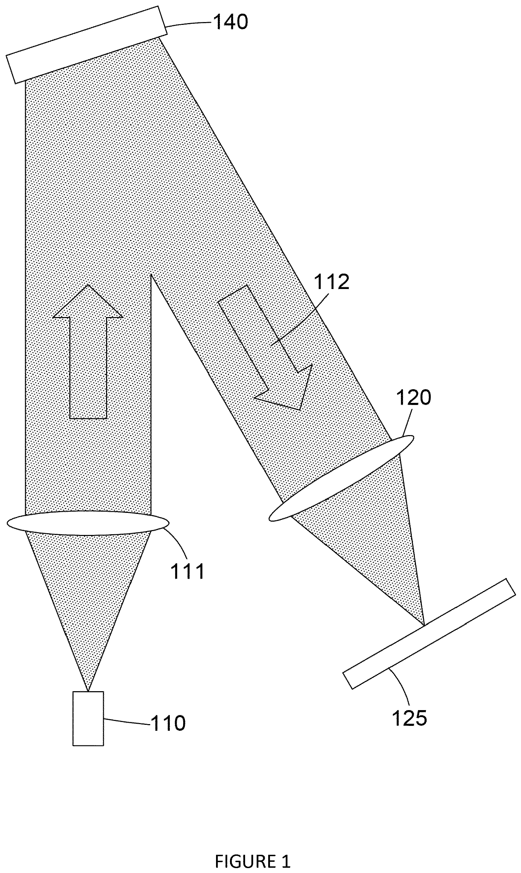

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\Psi_A(x, y)$ and $\Psi_B(x, y)$ respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information $\Psi[u, v]$ of the Fourier transform of the data set which gives rise to a known amplitude information $T[x, y]$, wherein the amplitude information $T[x, y]$ is representative of a target image (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information $\Psi[u, v]$ is used as the hologram to form a holographic representative of the target image at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a *real* component and an *imaginary* component or (ii) a *magnitude* component and a *phase* component. In some embodiments, the two components of the complex data are processed differently at various stages of the algorithm.

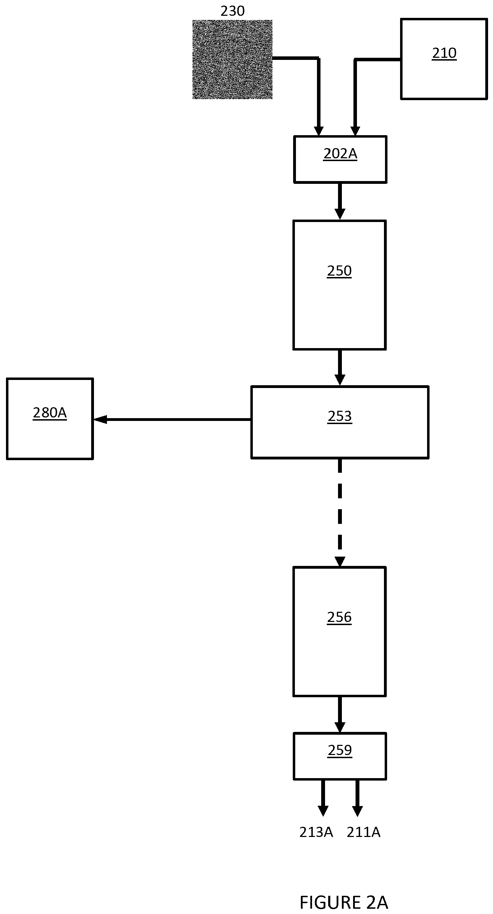

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain.

In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or user-defined.

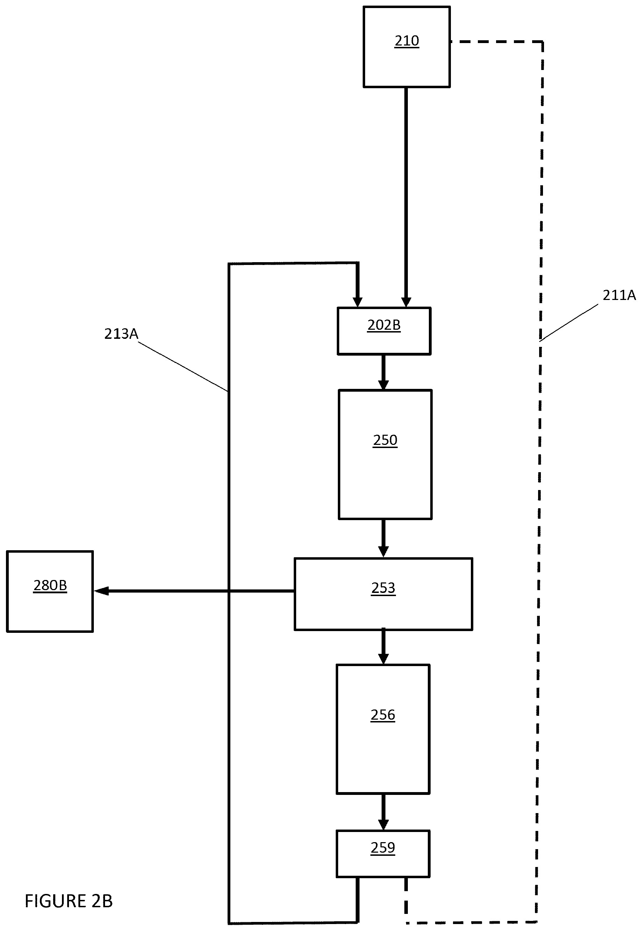

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

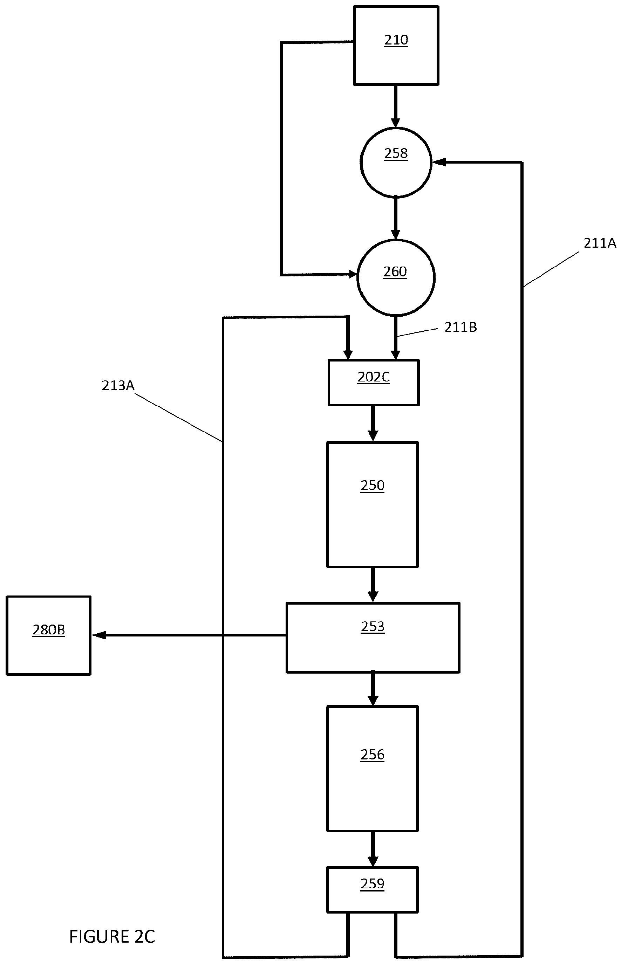

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x, y] = F'\{\exp(i\,\psi_n[u, v])\}$$

$$\psi_n[u, v] = \angle F\{\eta \cdot \exp(i\angle R_n[x, y])\}$$

$$\eta = T[x, y] - \alpha(|R_n[x, y]| - T[x, y])$$

where:

F' is the inverse Fourier transform;

F is the forward Fourier transform;
R[x, y] is the complex data set output by the third processing block 256;
T[x, y] is the input or target image;
$\angle$ is the phase component;
$\Psi$ is the phase-only hologram 280B;
$\eta$ is the new distribution of magnitude values 211B; and
$\alpha$ is the gain factor.

The gain factor $\alpha$ may be fixed or variable. In some embodiments, the gain factor $\alpha$ is determined based on the size and rate of the incoming target image data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\Psi(u, v)$ comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as image steering. Again, it is known in the field how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction. The second data providing lensing and/or steering may be referred to as a light processing function or light processing pattern to distinguish from the hologram data which may be referred to as an image forming function or image forming pattern.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and Fresnel holograms which may be calculated by a similar method. The present disclosure is also applicable to holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

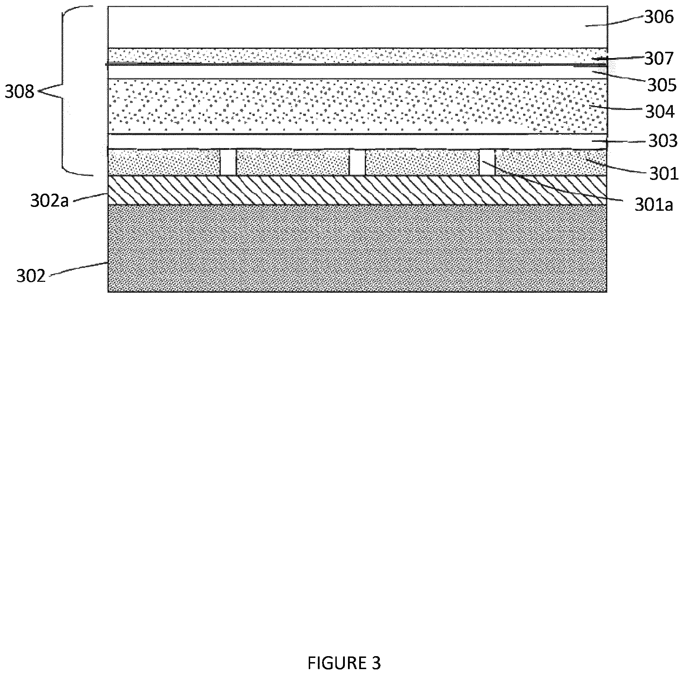

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

Multi-Wavelength Holographic Reconstruction

In many practical applications, the provision of multi-wavelength (i.e., multicolour) holographic reconstructions ("images") is desired. This conventionally requires the provision of individual holograms for each colour, which must be displayed separately. Each individual hologram must be separately illuminated by light of the corresponding respective colour/wavelength. There are two well-known conventional approaches to multicolour holography. The first is known as spatially-separated colours, "SSC" and the second is known as frame-sequential colour, "FSC".

The method of SSC uses three spatially separated arrays of light-modulating pixels for three respective single-colour (usually red/green/blue (RGB)) holograms. With SSC, the image can be very bright because all three holographic reconstructions may be formed at the same time and combined (e.g., superimposed) on a common plane, to form a resultant multicolour image (i.e., a multicolour holographic reconstruction). The three spatially separated arrays of light-modulating pixels may be provided, spatially separate to one another, on a common spatial light modulator (SLM), for example if space and/or financial restrictions dictate that multiple SLM's cannot be provided. However, the quality of each single-colour image in such an arrangement is sub-optimal because only a subset of the available light-modulating pixels on the SLM is used for each colour. Accordingly, a relatively low-resolution colour image is provided. Alternatively, three separate SLM's may be used for SSC - one for each colour. Each SLM will display a hologram of a different respective colour, each of which will be individually illuminated to output a respective optical channel of spatially modulated light. In such an arrangement, beam combining optics (e.g., an X-cube and dichromic mirrors) are required to combine the three optical channels, to enable the multi-colour image to be formed. This has the advantage of providing high quality images but providing multiple SLM's and the other required optics is expensive, and it also has significant impact on the size of the resulting optical system. In many circumstances, for example but not limited to head-up displays (HUD's) in vehicles, space is limited, and real estate value is high, such that compactness is generally highly desirable. Moreover, providing multiple SLM's is financially costly.

The method of FSC can use all pixels of a single common spatial light modulator to display the three single-colour holograms in sequence (i.e., one after the other). The single-colour reconstructions are cycled (e.g., red, green, blue, red, green, blue, etc.) fast enough such that a human viewer perceives a polychromatic image from integration of the three single-colour images. An advantage of FSC is that the whole SLM is used for each colour. This means that the quality of the three colour images produced is optimal because all pixels of the SLM are used for each of the colour images. However, a disadvantage of the FSC method is that the brightness of the composite colour image is lower than with the SSC method - by a factor of about 3 - because each single-colour illumination event can only occur for one third of the frame time. This drawback could potentially be addressed by overdriving the lasers, or by using more powerful lasers, but this requires more power, which results in higher costs and an increase in the size of the system. Moreover, FSC has the disadvantage of fewer sub-frames being available for tile-shifting and other techniques, which are conventionally applied for improving image quality.

The present inventors have devised an improved method and system for delivering high quality multicolour (i.e., multi-wavelength) holography in a compact, efficient and cost-effective manner. This has not previously been possible.

The inventors have devised a method and system for providing a diffractive structure (which may be referred to as being a "kinoform" or "hologram") that can simultaneously deliver multiple images, when displayed and illuminated on a single display device such as a spatial light modulator (SLM), such as a Liquid Crystal on Silicon (LCoS) SLM. For example, it may simultaneously (or, at least substantially simultaneously) deliver images of two or more different colours, when it is displayed and illuminated by light of the corresponding wavelengths. The image content for each colour may at least partially physically overlap with the image content for the respective other colour(s) or they may be physically separated from one another on the replay plane. The image content for each colour may be different to the image content of the respective other colour(s), or the individually coloured images may comprise common or overlapping image content, such that they combine/superimpose on the replay plane to form a single multi-colour image of that image content.

It is known that high-quality holographic projection typically requires a display device comprising pixels which can provide up to $2\pi$ phase retardation. The present disclosure relates to the display of a diffractive structure on a high-quality display device. For example, it may be displayed using a reflective liquid crystal display device having high resolution (high density of pixels) and fast-switching pixels for holographic projection at video rates using phase holograms. However, other types of holograms such as complex holograms (comprising both a phase component and an amplitude component) are contemplated within this disclosure. According to at least some embodiments of the present disclosure, a high-resolution display may be defined as one in which the pixel pitch is less than or equal to 5 $\mu$m such as less than 2 $\mu$m. However, this numerical example should not be regarded as limiting on the present disclosure.

The total retardation (i.e., phase delay) in a reflective cell, $\Phi$, satisfies the equation:

$$\Phi = 4\pi d\Delta n/\lambda \qquad (1)$$

where d is the cell gap (thickness), $\Delta$n is the birefringence of the liquid crystal and $\lambda$ is the wavelength of the light. The product d$\Delta$n is known as the path difference. Therefore, the type of liquid crystal and the thickness of the cell both influence the retardation that the cell is configurable to apply to incoming light. According to an embodiment, the method and system may be realised using a planar-aligned nematic cell comprising liquid crystals having positive dielectric anisotropy because this configuration is found to be effective for phase holography. The response time of such a cell is linked to the square of the cell gap. However, the present disclosure is not limited to such a cell.

It is known that the effective birefringence $\Delta$n exhibited by liquid crystals is voltage dependent. Therefore, the actual retardation that a given LC cell will apply depends not only on the wavelength of the illuminating light but also on the voltage applied to the cell, at any given time. Moreover, the voltage range that is required for an LC cell to deliver a full range of retardation (i.e., ranging from 0 to $2\pi$ of phase delay) will depend on the wavelength of the illuminating light. The longer the wavelength, the larger the voltage range required to deliver the full range of retardation. Each cell (or "pixel") of a high-quality display device can therefore be controlled to deliver a specific phase delay (i.e., a selected retardation, within the range of available retardations), dependent on the voltage applied across that cell, and dependent on the wavelength of the illuminating light, at any given time. Illuminating a cell with light of different respective wavelengths would therefore typically lead to the cell applying a different respective phase delay to the light of each wavelength, at any given voltage. Conventionally, when multicolour holography is required, this has led to the display of separate diffractive structures, each tailored for illumination by light of a different respective wavelength, wherein suitable voltages can be applied separately to the cells displaying each individual diffractive structure, to meet the phase delay demands for the respective colour images. However, the present inventors have devised a way of avoiding the need to display a plurality of different diffractive structures for multicolour holography, as detailed below.

When a diffractive structure such as a hologram or kinoform is calculated, it comprises multiple individual pixels, each of which can be displayed on a respective pixel of a display device. Each hologram pixel is quantized into several allowable "grey levels" during calculation, wherein a grey level is a quantization of the magnitude of the phase delay that the hologram pixel will impart, when displayed and suitably illuminated. The number of available grey levels determines the grey-level resolution - i.e., it is a measure of the number of different possible discrete modulation levels, across e.g. the 0 to $2\pi$ range, that each hologram pixel can impart. This conventionally affects the accuracy, or grey-level resolution, of the hologram and therefore the quality or accuracy (i.e. faithfulness) of the corresponding image reconstruction.

When a hologram is to be displayed on a display device, the voltage range over which the full ($2\pi$) range of phase delay can be delivered by the cells of the display device, for a specific wavelength, determines the voltage increment that the cells require, between adjacent hologram grey levels ("GL's"), for that wavelength. For example, if each cell needs a voltage range of 0V to 5V, to achieve up to $2\pi$ of retardation for red light, and if the displayed scheme comprises 128 evenly-spaced grey levels, each grey level should be approximately 40 mV apart. Therefore, for example, achieving the 12th grey level, GL12, for red light, would require a voltage application of 480 mV. The display system can be calibrated accordingly.

On the other hand, the same cells (with the same thickness and birefringence) may only need a voltage range of 0V to 2V to achieve a phase delay range of 0 to $2\pi$ for light of a different wavelength, such as green light. If those cells were calibrated for a "red hologram" (i.e., for a hologram that is configured to be illuminated by red light) with a 40mV gap between adjacent discrete grey levels, the full range of phase delay would be delivered by the first 50 grey levels, when the cells display a "green hologram" that is configured to be illuminated by green light. As a result, the differentiation in phase delay that could be imparted by the available grey levels for the green hologram would be diminished, as compared to the red hologram. In other words, the "grey-level resolution" (or, accuracy) of the green hologram would be less than that of the red hologram, for the same cell voltage calibration.

The conventional approach is therefore to use different calibration (i.e., to use different respective cells (e.g. different cell gap), or the same cells but calibrated differently at different respective times) for displaying holograms that are to be illuminated by different respective wavelengths. The convention is therefore to ensure that grey-level resolution is individually optimised/maximised for the holograms of each (i.e., every) respective colour. In the above example, therefore, the cells could be calibrated to separate adjacent grey levels of a green hologram by 15.6 mV - so that the full 128 grey levels (not just 50) would be available for display of the green hologram.

The present inventors have gone against convention, in determining that accurate multicolour images can be achieved by providing less-than-ideal grey-level resolution for the holograms of one or more colours. Moreover, they have identified that using imperfect grey-level resolution for one or more colours means that the same (single) hologram, displayed on one display device, may be illuminated by light of different respective colours in order to simultaneously (or at least in very rapid succession) form multiple different single-colour images, all of which can be of an acceptably high quality. This has not been possible with conventional holography. Moreover, it goes against significant prejudice and conventional expectations in the field of holography.

In broad terms, the inventors have devised a method and system that can provide one (i.e., a single) hologram that forms multiple images, when displayed and illuminated using a single display device. The hologram may populate all the pixels of the display device. Each (i.e., every) pixel of the hologram may contribute to each one of the multiple images. For example, a single hologram may be provided that can form red (R), green (G), and blue (B) images at (substantially) the same time, using a single display device, when suitably illuminated. This is possible even if the respective image contents of the R, G and B target images are different to one another. This is possible even if the respective image contents of the R, G and B target images physically overlap with each other, or if they are spatially distinct from one another on a replay plane.

The method of the present disclosure comprises, in broad terms, calculating multiple separate individual holograms and identifying an optimisation that can adequately represent each of those holograms simultaneously via the display of a single hologram on common (i.e. on the same) pixels of a single display device. For example, it may comprise calculating a separate hologram of a target image individually for each of a plurality of wavelengths - for example, calculating separate red (R), green (G) and blue (B) holograms, as is familiar from conventional multicolour holography. However, in a departure from conventional practice, the method of the present disclosure then considers which voltage or voltages each cell of the display device may be driven at, to achieve the required phase delay for the corresponding hologram pixel of each of the multiple individual holograms. Then, by applying intelligently selected biases, and using computation-quality optimisation methods, the individual holograms are combined into a single optimised hologram, and the display device can be calibrated and driven accordingly. A key to the success of this approach is that it embraces "phase wrapping" to provide adequate selection choices.

In effect, therefore, the method disclosed herein identifies an optimised hologram, which is a sufficiently good representation of each of the multiple individual holograms simultaneously. The present method therefore removes any requirement to display each individual hologram separately, because each hologram can instead be adequately represented by the optimised hologram and illuminated by its respective light source, using a single display device and using one (common) calibration for the display device. Moreover, the optimised hologram (or, common calibration) that simultaneously represents each hologram can be displayed across the entire display device, such that it enables good image quality and low noise for each of the images. This is surprising, and provides significant space and financial savings, vis-a-vis conventional holographic techniques. It also significantly reduces the complexity of the multicolour projector. In some embodiments, only one display device (and associated optics and electronics) is required rather than three.

The method of the present disclosure considers and harnesses the advantages of so-called "phase wrapping" (or, "phase repeating"). The inventors have observed that phase wrapping occurs when an LC cell is driven to a voltage that is greater than the minimum voltage required for it to provide a phase delay of $2\pi$, for any given wavelength. In conventional holography, each cell of a display device would only be driven to the minimum voltage required to achieve a particular phase delay for that cell, for a given wavelength of illuminating light. However, the present inventors recognised that because of phase wrapping, increasing the voltage applied to an LC cell beyond the minimum voltage required for it to provide a phase delay of $2\pi$, for any given wavelength, will cause the phase delay provided by the cell to increase beyond $2\pi$ for that wavelength. Moreover, they have recognised that, in practice, the retardation that the cell imparts is repetitive, with a repetition period of $2\pi$. This means that the retardation/phase delay that the cell imparts between 0 and $2\pi$ is repeated between $2\pi$ and $4\pi$. Therefore, a phase delay of "$\theta$" is the same as a phase delay imparted at "$\theta + m2\pi$", wherein 'm' is any non-zero integer. For example, the effect of a phase delay of $\pi$ is the same as the effect of a phase delay of $3\pi$, and so on.

The present inventors have therefore recognised that there are multiple different values of phase delay (i.e., one value between 0 and $2\pi$, another value between $2\pi$ and $4\pi$, and so on) that have the same retardation effects on light of a given wavelength - i.e., there are multiple different phase delay values that would spatially modulate the light of that wavelength in the same manner. The inventors have recognised that this means, correspondingly, that there are multiple different voltages at which an LC cell of a particular type and thickness could be driven, to provide a desired phase delay, for a given wavelength of light. With this in mind, the present inventors have departed from convention and have further recognised that, at least in some circumstances, it is possible to identify a common voltage that may be selected to provide at least an acceptable approximation of a respective desired phase delay, simultaneously, for each of a plurality of different holograms that are to be illuminated by different respective wavelengths of light. Therefore, if a common voltage is identified on a pixel-by-pixel basis, the result can be a set of voltage pixel drive values that correspond to an optimised single hologram that simultaneously represents each of the plurality of different holograms. The single optimised hologram may thus be used instead of the multiple individual single-colour holograms. This has not hitherto been possible.

The present inventors have recognised that, typically, in order to identify such a common voltage for each pixel of an optimised hologram, the display system will need to be configured to be driven in a voltage range that provides multiple voltage options for achieving the required phase delay for at least some of, and in some cases all of, the different wavelengths (corresponding to the different holograms that are to be represented). For example, if the display system is configured to provide a single hologram to represent multiple single-colour holograms of different respective colours, configured for illumination by light of different respective wavelengths, one can consider what happens to the shorter-wavelength light when the cells of the display device are driven at the relatively-high voltages that are necessary to achieve a full range of phase delay for the longer-wavelength hologram(s). For example, and as will be understood further from the detailed examples below, if individual red (R), green (G) and blue (B) holograms are to be replaced by a single optimised hologram, the display system may need to be driven at least within the voltage range that provides a 0 to $2\pi$ phase delay range for the red light, which has the longest wavelength of the three colours. Such a range may provide, for examples, two voltage level options for each phase delay value for the green hologram and two or three voltage level options for each phase delay value for the blue hologram. At least in some cases, it may be desirable to drive the display system to yet-higher voltage values, to enable multiple voltage level options for at least some phase delay values for the red hologram as well.

Thus, the present inventors have identified that it is possible to use a single, common encoding (or, "configuration") of the cells of a display device, for effectively displaying and illuminating multiple different holograms simultaneously, via a single, optimised hologram. The encoding comprises applying a "best-fit" or "optimised" voltage to each cell of the display device, to closely represent each of the multiple individual-wavelength holograms simultaneously. The voltage applied to at least some of the cells may be higher than the minimum voltage that is required to achieve a full $2\pi$ of phase delay, for the wavelength of light that corresponds to at least one of the holograms. Therefore, the voltage(s) applied may be higher than would be conventionally expected or required to represent one or more of the holograms on the display device.

In effect, when displaying the optimised hologram, the cells of the display device will be calibrated to provide the same predetermined voltage gap between adjacent grey levels for each of the multiple holograms that the optimised (multi-wavelength) hologram represents. Even though this may necessitate using less than ideal resolution, due to utilising fewer grey levels to sub-divide a respective $2\pi$ phase delay range, for at least one of the holograms (for example, a hologram that is to be illuminated by light of a relatively short wavelength, such as blue (B) light), the present inventors have found that the resulting images are still acceptably high in quality. Therefore, on balance, the methods and system disclosed herein are hugely beneficial as they enable a single display device to be used for simultaneous display of multiple holograms. For example, this enables one display device to display a group of red/green/blue (RGB) holograms simultaneously, without the typical sacrifices associated with conventional FSC techniques. This has significant benefits in terms of the resulting compactness and efficiency of the optical system and its financial cost-effectiveness.

The method and system disclosed herein may be further understood in relation to the appended Figures.

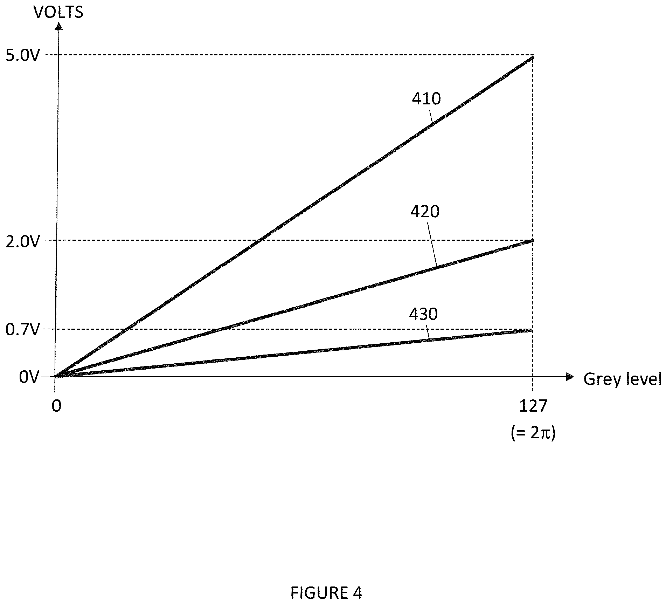

Figure 4 shows the voltage dependency of the phase delay (in the range 0 to $2\pi$) that is deliverable by an example display device - in this case, an LCOS SLM - for each of red, green and blue (RGB) holograms, when displayed on the LCOS and illuminated by light of the corresponding respective colour. As can be seen from the top line 410 in Figure 4, the LCOS must be driven between 0V and 5.0V to provide the full range of phase delay for red light. As can be seen from the middle line 420 in Figure 4, the LCOS only needs to be driven between 0V and 2.0V to provide the full range of phase delay for green light. As can be seen from the bottom line 430 in Figure 4, the LCOS only needs to be driven between 0V and 0.7V to provide the full range of phase delay for blue light.

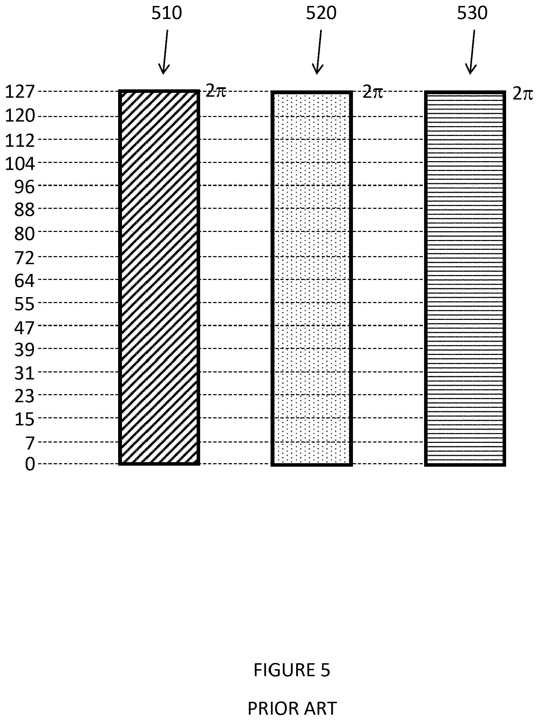

Figure 5 shows that there are 128 possible hologram grey levels, ranging from GL0 to GL127, which sub-divide the 0 to $2\pi$ phase delay range, along the x-axis. Although the present disclosure is not limited to the use of 128 grey levels, this is common for display devices that use a 7-bit drive scheme. Figure 5 also shows a histogram with 3 columns, depicting the even subdivision of the 0 to $2\pi$ phase delay range into 128 discrete grey levels for each of the red 510, green 520 and blue 530 light wavelengths. As Figure 4 shows, a different respective voltage is required to achieve the maximum phase delay of $2\pi$ of the full 0 to $2\pi$ phase delay range for each colour, such that, conventionally, the voltage gap between adjacent grey levels is wavelength-dependent, if each colour is to be represented at the same resolution, using all 128 grey levels. Conventionally, therefore, a display device would be arranged for separate calibration for holograms of each respective colour (or, multiple display devices would be provided, each one calibrated for a single respective colour) such that holograms of each colour could be displayed using all the 128 grey levels. Therefore, red light, in this example, would have a gap of approximately 40mV between adjacent grey levels, whereas green light would have a gap of approximately 15.6 mV between adjacent grey levels and blue light would have a gap of approximately 5.5 mV between adjacent grey level.

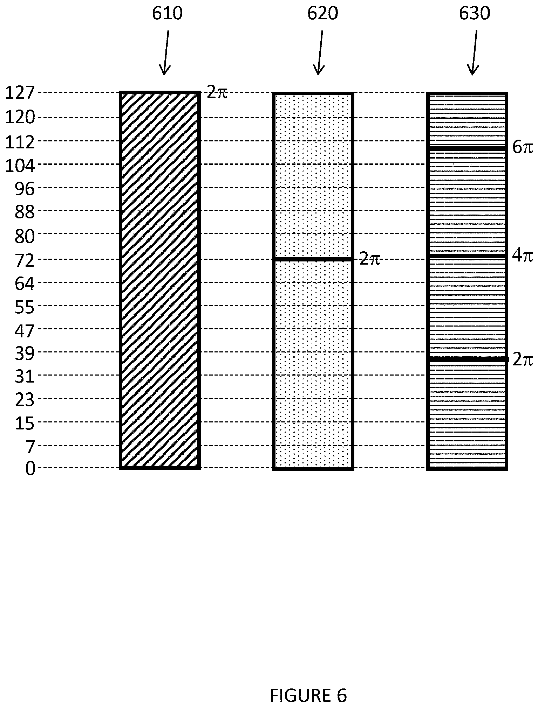

The present inventors have gone against convention and have found that it is possible to provide a single, common calibration of the cells of an LC device, to effectively represent multiple holograms simultaneously, wherein each hologram is configured for illumination by light of a different respective wavelength. This is illustrated in Figure 6, which comprises three columns that respectively represent the deliverable phase delay, over a common voltage range by a single display device, for three holograms (RGB) that are to be represented by a single optimised hologram in accordance with the present disclosure. In this example, the display device is like the example display device of Figure 4, and the depicted voltage range is 0 to 5.0V.

As can be seen in Figure 6, the present inventors have effectively extended the range of phase angles for the holograms that are respectively configured for illumination by light of each of the two shorter wavelengths (green 620 and blue 630), to provide a sufficient (0 to 5.0V) voltage range for the full 0 to $2\pi$ phase delay range to be deliverable for the third hologram, which is configured for illumination by light of a longer wavelength (red 610). The voltage range of 0 to 5.0V is sub-divided into 128 grey levels (GLO to GL127) for each of the three holograms.

For green light 620, the voltage range 0 to 5.0V enables a maximum phase delay of greater than $3\pi$ and for blue light 630, the voltage range 0 to 5.0V enables a maximum phase delay of greater than $6\pi$. However, due to phase wrapping, the phase delay at a phase angle of "$\theta$" is the same as a phase delay imparted at "$\theta + m2\pi$" (wherein 'm' is any non-zero integer.) Therefore, this extension of the range of phase angles does not, in practice, increase the number of discrete phase delays that can be imparted by the green and blue holograms. To the contrary, it means that that full 0 to $2\pi$ range for each of the green and blue wavelengths is compressed into a smaller respective voltage range and is correspondingly subdivided into fewer than 128 discrete grey levels. In this example, as can be seen from Figure 6, the full 0 to $2\pi$ range for green light is compressed into 73 grey levels (GLO to GL72) and the full 0 to $2\pi$ range for blue light is compressed into approximately 36 grey levels (GLO to GL35). Conversely, the red hologram has a phase delay range of 0 to $2\pi$, over the 0 to 5.0V voltage range, such that all 128 grey levels are used for distributing the possible phase delays that the red hologram can impart. As a result, the resolution of each of the green and blue holograms is reduced, as compared to the resolution of the red hologram, and the resolution of the blue hologram is reduced, as compared to the resolution of the green hologram. This may conventionally be expected to have a negative impact on the corresponding green and blue images, when those holograms are displayed and illuminated on the display device. However, the present inventors have identified that this impact is not significant, for optimised multiwavelength holograms as disclosed herein.

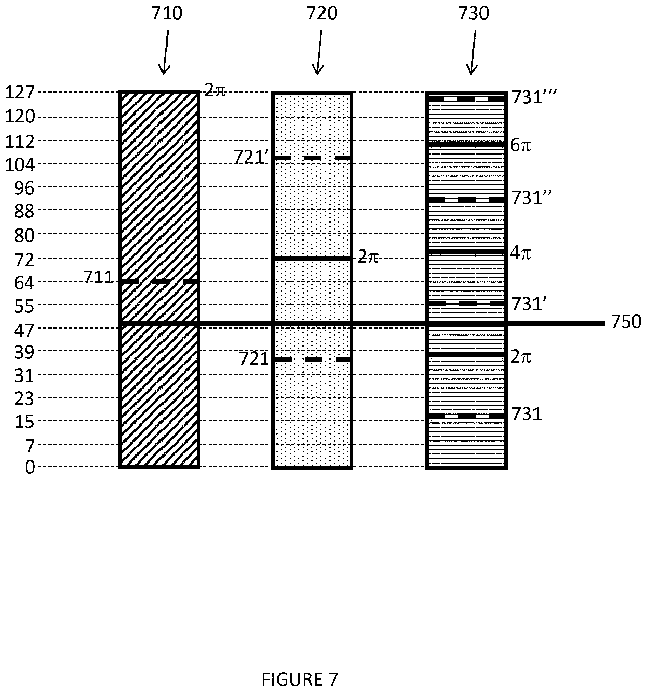

Figure 7 illustrates one example of how a multiwavelength hologram can be determined based on three individual RGB holograms, using the example display device of Figures 4 to 6 and using the common RGB cell calibration and the extended phase angles (i.e., phase wrapping) for G and B holograms described above in relation to Figure 6. This example should be regarded as being illustrative only - the colours and phase delay values used in this example are not limiting on the present disclosure. In Figure 7, the three columns each relate to the same single cell of the display device, and illustrate the required phase delay (and, thus, the corresponding required voltage) for a respective pixel of each of the three holograms, which would be displayed on that single cell, if each coloured hologram was displayed individually. The required phase delay for the red hologram 710 is indicated by a first dashed line 711 and is shown to be a phase delay of just below $\pi$, which corresponds to approximately grey level GL62 for the red hologram. The required phase delay for the green hologram 720 is indicated by a second dashed line 721 and is shown to be a phase delay that is also below $\pi$, which corresponds to approximately grey level GL33 for the green hologram. The required phase delay for the blue hologram 730 is indicated by a third dashed line 731 and is shown to be a phase delay that is also below $\pi$, which corresponds to approximately grey level GL14 for the blue hologram. Thus, even though the required phase delays are similar in magnitude for this pixel in each of the three holograms, because of the common calibration and the wavelength-dependency of the phase delay that is deliverable by the LC cell, the grey level that corresponds to the respective phase delay is (significantly) different for each wavelength, in this example.

Because phase wrapping is being used for the green 720 and blue 730 holograms in this example, the green 720 and blue 730 columns each show more than one possible voltage, and more than one corresponding grey level, at which the desired phase delay for that respective colour may be imparted. The green 720 column therefore shows a fourth dashed line 721', at GL104, at which the desired phase delay for the green hologram would be imparted. The blue 730 column shows a fifth dashed line 731', at approximately GL53, and a sixth dashed line 731" at approximately GL124, at each of which the desired phase delay for the blue hologram would be imparted. Therefore, in this example, within a voltage range of 0 to 5.0V for the selected display device, there is one possible option for a grey level to represent the required red phase delay, two possible options for grey levels to represent the required green phase delay, and three possible options to represent the required blue phase delay. The possible options indicated by the dashed lines on the three columns in Figure 7 may be referred to as the "ideal" hologram values, for the respective colours. However, the present inventors have found that it is possible to use a hologram value that is different to the ideal value for at least one of the colours (often, it is different to the ideal values for all three colours) and to still represent each hologram sufficiently accurately.

The present inventors have recognised that this provision of numerous options for imparting a desired/required phase delay, for holograms of one or more of the plurality of colours (i.e., for holograms configured to be illuminated by light of one or more respective different wavelengths) provides scope for finding a phase delay that is at least an acceptable approximation of the phase delay that is required of two or more different holograms simultaneously. In other words, the use of a common cell calibration for displaying each of a plurality of holograms of different respective colours and using an increased voltage range to harness the effects of phase wrapping, and thereby deliver a corresponding extended range of phase angles for at least one of those holograms, enables a single "optimised" or "best-fit" hologram to be determined, that can simultaneously represent (and therefore be used instead of) the plurality of individual holograms. This is remarkable and has not been possible using conventional holographic techniques to date.

Although not shown in the example of Figure 6 (to which the present disclosure is not limited), the present inventors have identified that, in some embodiments, it may be suitable to extend the drive voltage range for a display device even beyond the typical voltage range that is required to achieve a phase delay of 0 to $2\pi$ for the longest wavelength hologram (i.e., for the red hologram in the example above). This is to provide more than one option for delivering at least some of the required phase delays for each (i.e., every one) of the individual holograms, and thereby to improve the chances of finding an acceptable compromise between them, for provision of a single optimised hologram. Moreover, the type of cell (e.g., the birefringence of the LC's) and/or the cell gap/thickness may be considered and may be specifically selected in order to assist with achieving an optimised combination of desired phase delays for a selected image or set of images that is to be represented.

In the example of Figure 7, a straight line 750 is drawn across each of the three columns 710, 720, 730 at approximately GL 46. This straight line 750 represents a "best-fit" or "optimised" hologram value (i.e., an optimised phase delay value), which has a corresponding "optimised" pixel voltage drive level, that has been determined according to the methods disclosed herein, to represent each of the three holograms 710, 720, 730 simultaneously on a single pixel of the display device. One embodiment of a method for determining an optimised hologram value is detailed herebelow. However, in broad terms, the graphical illustration in Figure 7 shows that the optimised hologram value is effectively an average value based on three hologram values - one value representing the required phase delay for each of the three respective single-colour holograms - that are relatively close to one another. In this example, those values are the red hologram value 711 (GL62), the first green hologram value 721 (GL33) and the second blue hologram value 731' (GL53). The optimised hologram value in this example is not a simple "mean" value of the three single-colour hologram values but is weighted. The detailed description of an embodiment below provides more information on a possible approach to such weighting. However, it is possible to derive the optimised hologram value, at least in some circumstances, without weighting, and/or using a different weighting scheme to those detailed below.

The optimised hologram value 750 derived for this pixel may be displayed on a cell of a display device, to represent the corresponding pixels of all three (RGB) holograms simultaneously. The process of determining an optimised hologram value may be carried out for every pixel of the three holograms, such that the entirety of the three holograms may be represented by a single optimised hologram, which may be displayed and illuminated by light of each of the three colours. Moreover, the process may be repeated for multiple holograms, for example in quick succession, such as to represent successive images in a video-rate sequence of images.

According to an embodiment, a method for determining an optimised hologram as disclosed herein is as follows:

1. Separate a target image into individual wavelength-specific channels - for example, R, G, B channels. This is known from conventional holography and may be carried out in any suitable manner.

2. Calculate individual holograms for the channels - such as R, G, B holograms, using any suitable hologram calculation technique. This provides a respective phase-delay value for each pixel of each individual colour hologram.

3. Expand the pixel voltage range for at least the shorter wavelengths (i.e., green and blue), so that *at least* the voltage range necessary to get a phase delay range of 0 to $2\pi$ for the longest wavelength (red) is provided. The pixel voltage range for all wavelengths may be expanded. A decision on the extent of the pixel voltage expansion may be based on a Look-up Table (LUT) of the display device for the entire exploited wavelength region (i.e., spanning the wavelengths of the three colours), which relates the voltage values to the phase shift of the diffracted wave. For each pixel, the required phase delay to be imparted (in the range 0 to $2\pi$) for each colour can be identified, and any available repetition of that phase delay can be identified at a corresponding distance/phase difference above $2\pi$, and again above the next nearest integer multiple of $2\pi$, and so on, so that all the possible "ideal" R, G, and B hologram values for each pixel can be identified.

4. For each pixel, individually perform complex phase mixing by calculating all the possible R, G, and B combinations for all addressable voltages to determine the combination with minimum distance between "ideal" R, G, and B phase values. This can be done by looking at possible pairs of voltages, with each pair having a voltage level representing one colour and a voltage level representing a respective other colour - so there are R-G, G-B and B-R pairs, in this example. Here, a "selection bias" (Sb) can be applied to increase or decrease the weight of any R-G, G-B, and/or B-R distances. In other words, it is possible to separately/independently weight, or bias, the difference between the two grey levels in each pair (R-G, G-B, B-R). An example of this is shown in equation (2), below. Regardless of the exact details of how the complex phase mixing is performed, this step identifies three hologram values (one for each respective colour) that are relatively close together and that should be combined to provide the optimised hologram value, for that respective pixel.

5. For each pixel, combine the ideal R, G, and B pixel values that were identified in step 4., to provide an average value. At this stage, an "averaging bias" (Ab) can be applied to tilt the favourability towards certain wavelength(s) over others. An example of this is shown in equation (3), below. The average value is used to assign a common R, G and B pixel value, comprising a grey level, (e.g., GL0 to GL127) that can be used as a single optimised hologram value, to represent the corresponding pixels of all three holograms simultaneously.

6. When the above steps have been performed for each pixel, an optimised multi-wavelength hologram is output.

The weighting/bias values used in step 4 and/or step 5 above may vary based on, for example, the type of image and/or on the type or thickness of the LC cell, and/or based on any other suitable factor. The weighting/bias values may be predetermined and/or may be calculated based on one or more instantaneous conditions.

An example of one method for selecting, at step 4., which "ideal" hologram value should be used for each colour is given by equation (2) below:

$$|(R - G) * RGb| + |(G - B) * GBb| + |(B - R) * BRb| \qquad (2)$$

wherein, e.g., "R" = the pixel value/s of (one of) the "ideal" hologram value(s) for the corresponding colour (which may be expressed as a grey level, GL0 to Gl127, as per the example of Figure 7) and wherein, e.g., "RGb" = red-green bias (i.e., a factor that represents an importance/priority/significance placed on the closeness of the red and green values.)

An example of one method for calculating, at step 5., an average hologram value, once the combination of R/G/B values has been selected at step 4., is given by equation (3) below:

$$\frac{(R * Rb) + (G * Gb) + (B * Bb)}{Rb + Gb + Bb} \qquad (3)$$

wherein, e.g., Rb = red bias, indicating a favourability towards certain wavelength(s) over others - a bias value of 1 means no bias towards that respective wavelength.

In the embodiments described above, the LC cells are configured to modulate the phase of light. Accordingly, the light modulation values correspond to phase values of phase-based holograms. In other embodiments, the LC cells may be configured to modulate the amplitude or both the amplitude and phase of light. In particular, the skilled person will appreciate that the same principles may be applied to determine combined (e.g. average) light modulation values (grey levels with corresponding drive voltages) when the light modulation values correspond to amplitude values of amplitude-only holograms or amplitude and phase values of fully complex holograms. This is due to the fact that, similar to the phenomenon of "phase wrapping" described above, the LC cells may provide substantially the same level of amplitude/amplitude and phase modulation of light in response to different drive voltages. By way of example, British patent 2,576,552 describes the complex modulation behaviour of an LC cell. In particular, for a single wavelength of light, the characteristic curve of the amplitude and phase in the complex plane as a function of voltage traces a spiraled path. Thus, two or more discrete light modulation levels (grey levels with corresponding drive voltages) on respective adjacent overlapping/concentric spiral sections of the spiral path may be available to deliver substantially the same amplitude and phase modulation as each other. A similar effect may be observed in respect of the amplitude modulation behaviour of an LC cell. Accordingly, it is possible to calculate a single multi-wavelength hologram that represents two or more amplitude, phase or complex holograms of different wavelengths/colours by harnessing these effects, as described herein.

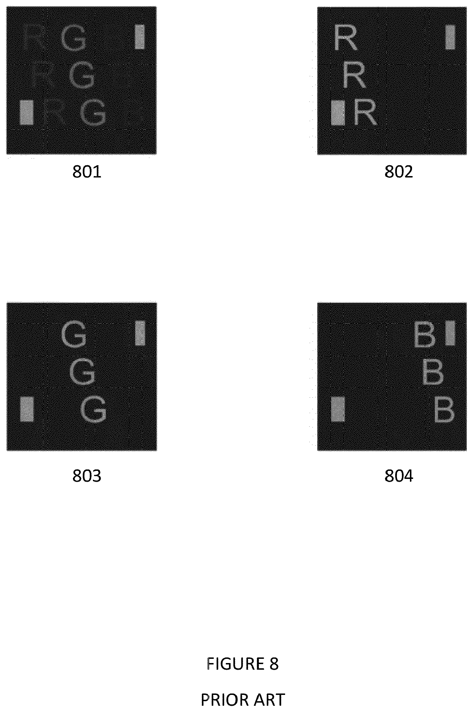

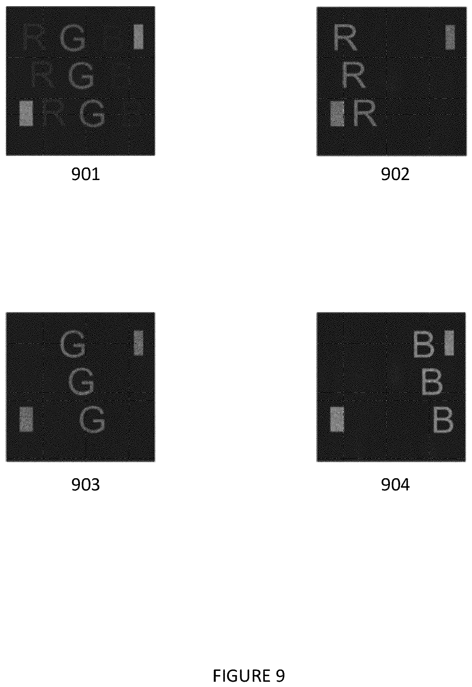

The present inventors have found that a multiwavelength hologram, calculated as described herein, can provide a high-quality approximation to a plurality of individual colour holograms. This is illustrated in Figures 8 and 9 herein.

Figure 8 shows results obtained using a standard Gerchberg-Saxton (GS) algorithm including a couple of known "optimisation" techniques, for calculating individual R, G and B holograms of a target image, displaying and illuminating each hologram separately, with the corresponding holographic reconstructions (i.e., (replay) images) being combined at a replay plane to form a multi-colour image. The top left-hand image 801 is the RGB reconstructed multicolour image from the optimised GS hologram. The top right-hand image 802 is the individual red reconstruction. The bottom left-hand image 802 is the individual green reconstruction and the bottom right-hand image 804 is the individual blue reconstruction.

Figure 9 shows the corresponding results obtained using the multiwavelength hologram of the present disclosure. The same optimised GS holograms of Figure 8 were subjected to additional processing, as per steps 3. to 6. above, including "Selection Biasing" (Sb), and "Averaging Biasing" (Ab), to form an optimised multi-wavelength hologram (or "multi-wavelength kinoform", (MWK)) in accordance with the present disclosure. The top left-hand image 901 is the RGB reconstructed multicolour image from the optimised multi-wavelength hologram. The top right-hand image 902 is the individual red reconstruction, using the red values selected at step 4. of the disclosed method. The bottom left-hand image 902 is the individual green reconstruction, using the green values selected at step 4. of the disclosed method, and the bottom right-hand image 904 is the individual blue reconstruction, using the blue values selected at step 4. of the disclosed method.

The "quality" of the holographic reconstructions may be quantified in two ways: contrast and mean square error, "MSE". Contrast is measured by specifying a square of size 25-by-25 pixels over a white region (255,255,255) and black region (0,0,0) and measuring the average grayscale value of each of those before subtracting to compute contrast value. The higher the contrast, the truer the replay field/holographic image is to the original target image. Mean Square Error (MSE) is measured by obtaining pixel-by-pixel intensity difference of the reconstructed image from the original image. The lower the MSE, the truer to original image it is, and in our case the original/source image was used as a control image, to which the reconstructions were compared.

Table 1:

| Figure | Contrast | MSE |
| --- | --- | --- |
| 8 (prior art) | 145 | 0 |
| 9 (disclosed herein) | 129 | 0.082 |

Table 1 above shows the contrast and MSE results for the images of Figures 8 and 9 herein. There is very little difference in the MSE values, and the contrast values are also highly similar. Therefore, the quality of the images produced by the multiwavelength holograms disclosed herein is comparable to the quality of images produced by conventional holography, but without the sacrifices, compromises and difficulties in terms of factors such as system bulk, financial cost, and control complications, which those conventional techniques involve. The methods and systems disclosed herein therefore comprise a very significant improvement, vis-a-vis conventional holography, and provide the potential for multi-colour holography to be provided more compactly, more efficiently and cost-effectively, and so to be provided in a much wider range of applications, and to be more accessible, than is currently the case using conventional holography.

Whilst the example images in Figures 8 and 9 have the red, green and blue components spatially separated from one another, with different respective image contents, this example is purely illustrative and should not be regarded as limiting. The methods disclosed herein may be implemented for any target image, including one for which the individual colour reconstructions have common or overlapping image content, and/or for which the individual colour reconstructions partially or fully spatially overlap on a replay plane. Moreover, the methods disclosed herein may be applied to individual wavelength holograms of any kind, including those which are configured to provide multiple images on different respective replay planes, when suitably displayed and illuminated. Thus, a multi-wavelength hologram calculated as described herein may also be multi-image.

Although three holograms have been combined in the examples described above, this should not be regarded as limiting. The disclosed methods apply to combining any plurality of holograms (i.e., to combining two or more holograms). Moreover, whilst the examples described above involve R, G, B holograms, the disclosed methods may be applied to holograms configured for illumination by light of any selected individual wavelengths.

Additional features

In some embodiments, the light source is a laser such as a laser diode. In some embodiments, the light receiving surface is a diffuser surface or screen such as a diffuser. The holographic projection system of the present disclosure may be used to provide an improved head-up display (HUD) or head-mounted display. In some embodiments, there is provided a vehicle comprising the holographic projection system installed in the vehicle to provide a HUD. The vehicle may be an automotive vehicle such as a car, truck, van, lorry, motorcycle, train, airplane, boat, or ship.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part. In examples, the instructions may be executed by a processor for performing hologram calculation (e.g. hologram engine) or by a processor for driving a display device (e.g. voltage selection unit or display driver). The term "processor" may include a microcontroller, an FPGA, an ASIC or any other type of hardware component suitable for image processing as described herein.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1.  A projector arranged to project a first image and a second image using one multi-wavelength hologram, the projector comprising a display device for displaying the multi-wavelength hologram, wherein the first image is different to the second image, and wherein the multi-wavelength hologram is arranged for illumination by light of a first wavelength to project the first image and wherein the multi-wavelength hologram is further arranged for illumination by light of a second, shorter wavelength to project the second image.

2.  The projector of claim 1 wherein the first and second images are projected onto a common replay plane.

3.  The projector of claim 1 or claim 2 wherein the display device comprises a plurality of pixels, wherein each pixel is configurable to provide a phase modulation value in the range 0 to $2\pi$ at the first wavelength, within a corresponding first operating range of voltage drive levels, and wherein the display device is configured to provide phase modulation for the multi-wavelength hologram using a predetermined maximum number of discrete phase modulation levels; the projector further comprising a display driver configured to distribute the discrete phase modulation levels over a voltage range that equals or exceeds said first operating range of voltage drive levels, optionally wherein each pixel of the display device is also configurable to provide a phase modulation value in the range 0 to $2\pi$ at the second wavelength, within a corresponding second operating range of voltage drive levels, and wherein the projector is configured to drive one or more of the pixels to a voltage that exceeds the maximum voltage in the second operating range of voltage drive levels.

4.  The projector of any preceding claim, wherein the projector is arranged to illuminate the multi-wavelength hologram with light of the first wavelength to form the first image and light of the second wavelength to form the second image, optionally wherein the projector is arranged to illuminate the multi-wavelength hologram with light of the first wavelength and light of the second wavelength substantially simultaneously.

5. The projector of any preceding claim wherein the multi-wavelength hologram comprises a representation of each of a first hologram, comprising a first set of hologram pixel values corresponding to the first image, and a second hologram, comprising a second set of hologram pixel values corresponding to the second image.

6. The projector of claim 5 wherein each pixel of the multi-wavelength hologram comprises a combined hologram pixel value determined from corresponding first and second hologram pixel values of the first hologram and the second hologram respectively, optionally wherein:

each combined hologram pixel value comprises an average value determined from the corresponding first and second hologram pixel values of the first hologram and the second hologram respectively, or
at least one of the first hologram pixel value and the second hologram pixel value has a respective weighting applied thereto, for determining the combined hologram pixel value.

7. The projector of any preceding claim, the projector further comprising a processor arranged to, for a selected pixel of the display device, obtain at least a first pixel drive level for the first hologram and obtain at least a second pixel drive level for the second hologram, and determine a multi-wavelength pixel drive level for that pixel of the display device, based on the first and second pixel drive levels, optionally wherein the multi-wavelength pixel drive level is determined based on a best fit between the first pixel drive level for the first hologram and the second pixel drive level for the second hologram.

8. The projector of claim 7 wherein the processor is arranged to, for the selected pixel of the display device, obtain a plurality of second pixel drive levels for the second hologram, wherein each of said plurality of second pixel drive levels corresponds to the same light modulation level for the second hologram, and to determine the multi-wavelength pixel drive level based on the first pixel drive level and a selected one of the plurality of second pixel drive levels.

9. The projector of claim 8 wherein the processor is further arranged to, for the selected pixel of the display device, obtain a plurality of first pixel drive levels for the first hologram, wherein each of said plurality of first pixel drive levels corresponds to the same light modulation level for the first hologram, and determining the multi-wavelength pixel drive level based on a selected one of the plurality of first pixel drive levels and a selected one of the plurality of second pixel drive levels, optionally wherein the step of determining the multi-wavelength pixel drive level comprises identifying a best match pair of pixel drive levels, wherein the pair comprises one from the plurality of first pixel drive levels and one from the plurality of second pixel drive levels.

10. A projector as claimed in any preceding claim arranged to project a first image, a second image and a third image using one multi-wavelength hologram, wherein each of said first, second and third images are different, and wherein the multi-wavelength hologram is arranged for illumination by light of a first wavelength to project the first image, and is further arranged for illumination by light of a second, shorter wavelength to project the second image, and is further arranged for illumination by light of a third, shortest wavelength to project the third image, optionally wherein the light of the first, second and third wavelengths comprises red, green and blue light, respectively.

11. A method of determining a multi-wavelength hologram, said multi-wavelength hologram being configured to project a first image and a second image when it is displayed on a pixelated display device and illuminated by light of a first wavelength to project the first image and by light of a second, shorter wavelength to project the second image, wherein the first image is different to the second image; the method comprising:

i) obtaining a first hologram, comprising a first set of hologram pixel values corresponding to the first image;
ii) obtaining a second hologram, comprising a second set of hologram pixel values, corresponding to the second image;
iii) determining a first operating range of voltage drive levels, wherein each pixel of the display device is configurable to provide a light modulation value in a full range of light modulation values at the first wavelength, when driven within the first operating range;
iv) determining a maximum number of discrete light modulation levels for the display device and distributing those discrete light modulation levels over a voltage range that equals or exceeds said first operating range of voltage drive levels;

v) using the distributed discrete light modulation levels to separately represent each of the first hologram and the second hologram and outputting a corresponding first set of pixel drive levels for the first hologram and a second set of pixel drive levels for the second hologram;

vi) for each pixel of the multi-wavelength hologram, selecting a first drive level from the first set of pixel drive levels, to represent the corresponding pixel of the first hologram, and selecting a second drive level from the second set of pixel drive levels, to represent the corresponding pixel of the second hologram, and outputting a multi-wavelength drive level for that pixel, based on the selected first and second drive levels;

vii) using the multi-wavelength drive level output for each pixel to form the multi-wavelength hologram.

12. The method of claim 11 wherein, in step vi), the selected first drive level and the selected second drive level are close to one another in magnitude, optionally wherein they are closer to one another in magnitude than any other possible pair of drive levels that comprises a first drive level from the first set of pixel drive levels and a second drive level from the second set of pixel drive levels, optionally wherein step vi) further comprises determining an average drive level from said first drive level and said second drive level and wherein the average drive level is output as the multi-wavelength drive level for that pixel, further optionally wherein at least one of said first drive level and said second drive level is weighted, to obtain the average drive level.

13. The method of claim 11 or 12 wherein the light modulation values comprise phase modulation values, and the full range of phase modulation values at the first wavelength is from 0 to $2\pi$.

14. The method of any one of claims 11 to 13 further comprising displaying the multi-wavelength hologram on the display device, and optionally further comprising illuminating the display device with light of the first wavelength and light of the second wavelength to project the first and second images.

15. A processor arranged to perform the method of any one of claims 11 to 14, optionally comprising one of: a hologram engine; a display device driver and a controller, or a computer readable medium comprising instructions which, when executed by a processor, perform the method of any one of claims 11 to 14, or a diffractive structure formed by the method of any one of claims 11 to 14.

FIGURE 1

FIGURE 2A

210

211A

213A

202B

250

253

280B

256

259

FIGURE 2B

FIGURE 2C

306
307
305
304
303
301
301a

308

302a

302

FIGURE 3

FIGURE 4

FIGURE 5

PRIOR ART

FIGURE 6

FIGURE 7

801

802

803

804

FIGURE 8

PRIOR ART

901

902

903

904

FIGURE 9

**EUROPEAN SEARCH REPORT**

Application Number

EP 23 15 3048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JESACHER ALEXANDER ET AL: "Colour hologram projection with an SLM by exploiting its full phase modulation range", OPTICS EXPRESS, vol. 22, no. 17, 25 August 2014 (2014-08-25), page 20530, XP093055215, US ISSN: 1094-4087, DOI: 10.1364/OE.22.020530 * abstract; figures 1-5 * * page 20533, line 4 – line 14 * * section "2. Method of multi-color DP calculation"; page 20533 – page 20534 * * section "3. Experiments"; page 20534 – page 20540 * | 1-15 | INV. G03H1/08 G03H1/22 G09G3/00 G09G3/18 G09G5/02 G09G3/20 G09G3/36 ADD. G03H1/26 |
| X | MAKOWSKI MICHAL ET AL: "Experimental evaluation of a full-color compact lensless holographic display", OPTICS EXPRESS, vol. 17, no. 23, 9 November 2009 (2009-11-09), page 20840, XP093055213, US ISSN: 2161-2072, DOI: 10.1364/OE.17.020840 | 1-7,10 | |
| A | * the whole document * | 8,9, 11-15 | |

TECHNICAL FIELDS SEARCHED (IPC)

G03H
G09G

-/--

The present search report has been drawn up for all claims

| Place of search | Date of completion of the search | Examiner |
|---|---|---|
| Munich | 20 June 2023 | Lutz, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 15 3048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUE GAOLEI ET AL: "Multiplexing encoding method for full-color dynamic 3D holographic display", OPTICS EXPRESS, vol. 22, no. 15, 28 July 2014 (2014-07-28), page 18473, XP093055214, US ISSN: 1094-4087, DOI: 10.1364/OE.22.018473 | 1-7,10 | |
| A | * the whole document * | 8,9, 11-15 | |

-----

TECHNICAL FIELDS
SEARCHED (IPC)

The present search report has been drawn up for all claims

| Place of search | Date of completion of the search | Examiner |
|---|---|---|
| Munich | 20 June 2023 | Lutz, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2498170 A
- GB 2501112 A
- GB 2576552 A